# EUROPEAN PATENT SPECIFICATION

(11) **EP 2 083 181 B1**
(45) Date of publication and mention of the grant of the patent: **21.07.2010**
(21) Application number: 08019252.9
(22) Date of filing: 04.11.2008
(51) Int. Cl.: F16C 3/20, F16D 3/10

(54) **Developments in or relating to the balancing of a rotating assembly**
Entwicklungen an oder im Zusammenhang mit dem Auswuchten einer rotierenden Anordnung
Développements de ou associés à l'équilibrage d'un ensemble rotatif

(30) Priority: 20.12.2007 GB 0724818
(43) Date of publication of application: 29.07.2009
(73) Proprietor: Rolls-Royce plc, 65 Buckingham Gate London SW1E 6AT (GB)
(72) Inventor: Harrison, John Michael, Bristol BS36 2SJ (GB)
(74) Representative: Tindall, Adam

(56) References cited:
- DE-A1- 19 830 930
- DE-A1-102004 007 050
- DE-A1-102004 007 052
- DE-A1-102005 013 141
- DE-C- 941 880
- US-A- 5 237 892
- US-A- 5 259 677

## Description

The present invention relates to a rotating arrangement comprising a rotating assembly mounted on a bearing, for example a rotor assembly in a gas turbine, and more particularly to developments in or relating to the balancing of such a rotating assembly.

It is known to balance rotating components in various applications, principally in order to reduce unwanted noise, vibration and excessive wear to associated bearings.

United States Patent No. 5259677 (Degrange et al) describes a means of balancing a shaft mounted in an eccentric sleeve, the sleeve being supported on bearings. The eccentric sleeve is provided with weighted lobes at either end. The lobes are held in a fixed relationship relative to one another and the shaft. The lobes have a mass distribution such that any dynamic imbalance resulting from the rotating sleeve is offset and cancelled.

Rotating components can be balanced by re-distributing the mass of the component so that the centre of mass of the component coincides with the geometric axis of rotation of the component.

A common method of re-distributing the mass of the component, in order to balance the component, is to add material to the component or to remove material from the component. However, each of these methods carries an associated weight penalty, which can be particularly critical in, for example, aerospace applications. In the case of balance methods where material is removed from the component during balancing, this weight penalty arises from the fact that the component must initially be provided with additional, sacrificial material that can be removed for balancing purposes, but which almost inevitably is not entirely removed during the balancing process.

The weight penalty associated with balancing of rotating components can be reduced to a certain extent using so-called "mass centring" balancing methods, which involve machining the location features of the component according to an offset calculated following an initial balancing operation, such that the position of the geometric axis of rotation (defined by the location features) is made to be coincident with the centre of mass of the component. However, such mass centring balancing methods have the disadvantage that machining of the location features is permanent. This is a particular problem when it is required to balance a rotating assembly rather than a single, individual component because routine strip and rebuild of the rotating assembly can result in a small but significant change in the position of the centre of mass of the assembly relative to the geometric axis of rotation defined by the permanent location features, so that the location features are then effectively in the wrong position for the re-assembled rotating assembly. It may be possible to re-balance the assembly by adding or removing material from the assembly but providing for re-balancing in this manner will again carry an undesirable weight penalty.

It is an object of this invention to seek to overcome one or more of the above disadvantages associated with existing balancing methods.

According to the present invention there is provided a rotating arrangement comprising a rotating assembly mounted on an associated bearing defining a geometric axis of rotation for the rotating assembly, the rotating assembly comprising:
i) a first part mounted on the bearing for rotation relative to the bearing about the geometric axis;
ii) a second part engaged with the first part for independent relative angular adjustment about a second axis, eccentric to the geometric axis; and
iii) a third part engaged with the second part for independent relative angular adjustment about a third axis, eccentric to the second axis;
whereby said rotating arrangement is configured such that relative angular adjustment of the second part about the second axis and/or relative angular adjustment of the third part (6,13,19) about the third axis (C) will adjust the position of the centre of mass of the rotating assembly such that it is substantially co-incident with the geometric axis of rotation.

The bearing may be a circular ring bearing defining the geometric axis and the first part may be an outer eccentric support member rotatably mounted concentrically within the ring bearing, the second part being rotatably supported inside the outer eccentric support member for said angular adjustment relative to the outer eccentric support member, about the second axis.

Preferably, the second part is an inner eccentric support member nested within the outer eccentric support member, the third part being rotatably supported inside the inner eccentric member for said independent, angular adjustment relative to the inner eccentric support member, about the third axis.

The first, second and third parts need not be co-planar, and can be displaced along the geometric axis of rotation of the assembly.

Preferably, the distance between the second axis and the geometric axis is substantially equal to the distance between the third axis and the second axis.

In one embodiment, the rotatating assembly is mounted on a spaced-apart pair of said bearings and the rotating assembly comprises a corresponding pair of said first parts and corresponding pair of said second parts, the respective axial ends of said third part being engaged with the second parts, whereby the rotating arrangement is configured such that opposing angular adjustment of the second parts relative to the respective first parts will adjust the principal inertia axis to be aligned with, or parallel to, the geometric axis of rotation.

The third part may be a sub-assembly comprising at least two assembled components, for example a rotor assembly.

According to another aspect of the invention, there is provided a method of balancing the rotating assembly in an arrangement according to any preceding claim, the method comprising the steps of:
i) determining an unbalance in the rotating assembly; and
ii) independently adjusting the angular position of each second part relative to one or both of the third part and the corresponding first part to consequently adjust the position of the centre of mass of the rotating assembly to be substantially co-incident with the geometric axis of rotation.

In order that the invention may more readily be understood, embodiments of the invention will now be described, by way of example, with reference to the accompanying drawings, in which:-
Figure 1 is a cross-sectional view of a rotating arrangement comprising a rotatable assembly mounted upon a bearing, looking down the geometric axis of rotation of the rotatable assembly;
Figure 2 is a schematic diagram illustrating the movement of various parts of the rotatable assembly in Figure 1 relative to the geometric axis of rotation;
Figure 3a is a partially exploded perspective view showing an alternative rotor arrangement;
Figure 3b shows the arrangement of Figure 3a in an assembled state;
Figure 4 is a schematic view illustrating movement of various parts of the rotatable assembly in Figures 3a and 3b about the geometric axis of rotation;
Figure 5 is a perspective view of a yet further alternative rotor arrangement shown in a configuration corresponding to zero unbalance compensation;
Figure 6 is a perspective view of the rotating arrangement shown in Figure 5, but with the rotating assembly in a configuration for static unbalance compensation; and
Figure 7 is a perspective view of the rotating arrangement shown in Figure 5, but with the rotating assembly in a configuration for couple unbalance compensation.

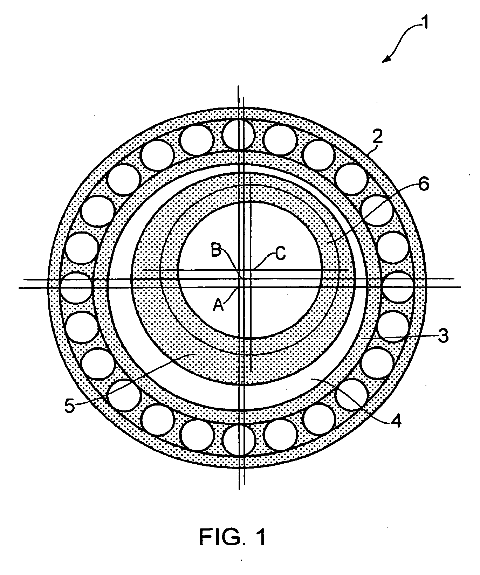

Figure 1 shows a rotating arrangement 1 comprising a generally planar bearing 2, in this case a circular ball-bearing. For the purposes of clarity, the bearing 2 is shown only diagrammatically and in isolation in Figure 1, but in practice may form part of a larger assembly such as, for example, a gas turbine or the like.

A rotating assembly 3 is mounted to the bearing 2 and comprises three parts:
The first part is an outer eccentric annular member 4 concentrically mounted on the bearing 2 for rotation about a geometric axis of rotation A at the centre of the circular bearing 2. The annular member 4 is generally co-planar with the bearing 2 and is eccentric in the sense that the inner circular periphery of the annular member 4 is centred upon a second axis B that is eccentric to the geometric axis A (ie the second axis B is parallel to, but displaced from, the geometric axis A).
The second part is in the form of an inner eccentric annular member 5 concentrically supported on the inner circular periphery of the annular member 4 for rotation relative to the annular member 4 about the second axis B. Again, the inner eccentric annular member 5 is generally co-planar with the bearing 2 and is eccentric in the sense that the inner circular periphery of the annular member 5 is centred upon a third axis C, which is eccentric to both the geometric axis A and the second axis B. Thus, if the annular member 5 is rotated around the second axis B, relative to the annular member 4, the third axis C consequently moves around the axis B in a circular orbit.
The third part 6 is concentrically supported on the inner circular periphery of the annular member 5 for rotation, relative to the annular member 5, about the third axis C. The third part 6 may be an individual component such as, for example, a rotatable shaft, or may form part of a larger sub-assembly, for example a rotor assembly in a gas turbine application or the like.

In use, the rotating assembly 3 is rotated about a geometric axis of rotation A, at the centre of the bearing 2, by rotating the outer eccentric annular member 4 relative to the bearing 2. In order to reduce unwanted vibration, noise and excessive bearing wear on the bearing 2, it is preferable that the centre-of-mass of the rotating assembly 3 is co-incident with the geometric axis of rotation A and therefore, where the initial mass distribution of the rotating assembly 3 is such that the centre-of-mass is offset from the geometric axis of rotation A, the centre-of-mass needs to be adjusted so that as far as possible it is co-incident with the geometric axis of rotation A.

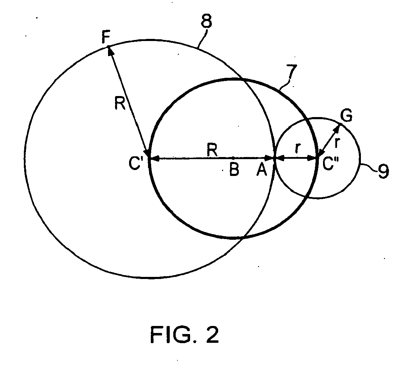

Figure 2 illustrates how independent angular adjustment of the annular members 4, 5 and the third part 6 can be used to adjust the centre-of-mass of the rotating assembly 3, relative to the geometric axis of rotation A, with the aim of positioning the centre-of-mass of the rotating assembly 3 on the geometric axis of rotation A.

Thus, referring to Figure 1, when the relative angular position of the inner and outer annular members 5,4 is adjusted, the inner angular member 5 will rotate around the second axis B and the third part 6 will likewise rotate with the annular member 5 about the second axis B, with the result that the third axis C will effectively trace the circular path 7 shown in Figure 2, relative to the geometric axis A. (For the purposes of clarity, it is assumed in Figure 2 that the outer annular member 4 remains fixed relative to the bearing 2 during relative angular adjustment of the annular members 4,5; of course, any relative rotation between the annular member 4 and bearing 2 will only result in symmetric rotation of the entire rotating assembly 3 about the geometric axis A).

In this manner, the distance between the third axis C and the geometric axis A can be adjusted between a lower limit r (see the position C" for the axis C in Figure 2) and an upper limit R (see the position C' for the axis C in Figure 2). At the same time, such adjustment will not substantially affect the radial distance of the centre of mass of the rotating assembly 3 from the axis C, which will remain effectively fixed.

Thus, by adjusting the relative angular position of the annular members 4,5 the centre-of-mass and geometric axis A can be positioned at the same radial distance from the axis C.

Once the centre-of-mass and geometric axis A have been positioned at the same radial distance from the axis C, the third part 6 can then be independently rotated relative to the combination of the bearing 2 and annular members 4,5 (ie whilst maintaining the bearing 2 and annular members 4,5 in fixed angular position with respect to one another) to adjust the angular position of the centre-of mass and geometric axis A about the axis C until the centre-of-mass and geometric axis A are co-incident.

For example, referring to Figure 2, for a hypothetical centre-of-mass F at a radial distance R from the third axis C, the third axis C can be adjusted to the position C' at a distance R from the geometric axis A (by relatively adjusting the annular members 4,5 in the manner described) and then the centre of mass F and geometric axis A can be angularly adjusted along the dotted path 8 (by rotating the third part 6 about the axis C) to bring the centre-of-mass into coincidence with the geometric axis A. Similarly, for a hypothetical centre-of-mass G at a radial distance r from the third axis C, the third axis C can be adjusted to the position C", at a distance r from the geometric axis A, and then the centre-of-mass G and geometric axis A can be angularly adjusted along the dotted path 9, about the axis C, to bring the centre-of-mass G into co-incidence with the geometric axis A.

It will be appreciated that the parameter r is a function of the relative positions of the axes A, B and C, and therefore its value can be minimised as far as possible within specified tolerances. Indeed, it is envisaged that, by equating the (fixed) radial distance of each of the axes A, C relative to the axis B, r can be made to be zero.

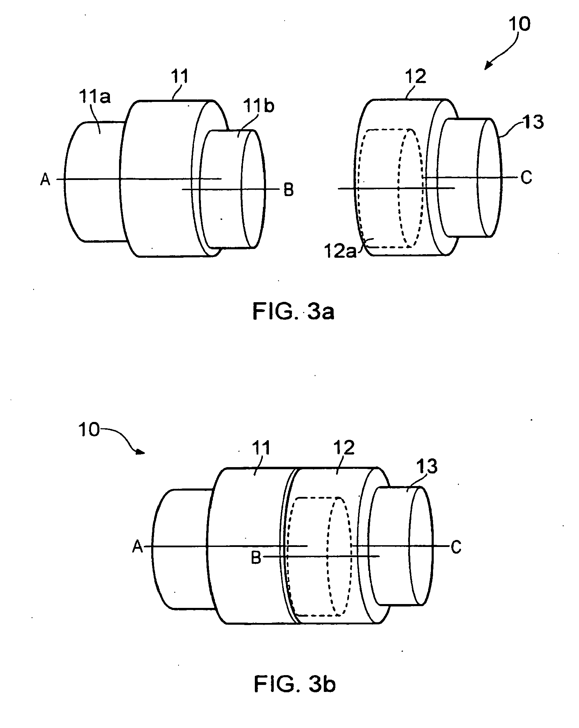

Figures 3a and 3b show an alternative rotating assembly 10 comprising a first part 11, second part 12 and a third part 13 which are displaced along a geometric axis A.

It should be emphasised here that Figures 3a and 3b are merely schematic and are intended to illustrate the underlying principal of the invention. In particular, the precise overall shape of the various parts 11, 12 and 13 may vary in practice and the parts might form part of any number of different possible rotating assemblies such as, for example a rotor assembly in a gas turbine application.

Referring then to Figure 3a, which shows a partially exploded view of the arrangement 10, the first part 11 might generally be described as an "eccentric cylinder", in the sense that it comprises a first cylindrical section 11a configured to be mounted on an associated bearing (not shown) for rotation, relative to the bearing, about the geometric axis A shown in Figure 3a, and a second cylindrical section 11b fixed to the cylindrical section 11a and centred on a second (longitudinal) axis B eccentric to the geometric axis A.

The second part 12 is also generally cylindrical and comprises a cylindrical bore 12a corresponding in dimensions to the second cylindrical section 11b on the first part 11. As best shown in Figure 3b, the cylindrical bore 12a and cylindrical section 11b can thus be rotatably engaged with one another to rotatably mount the second part 12 on the first part 11, whereby the second part 12 can be rotated, relative to the first part 11, about the second axis B.

The third part 13 is rotatably supported on the second part 12 for rotation, relative to the second part 12, about a third axis C. The third part 13 is shown in Figures 3a and 3b as a simple cylinder, but in practice might be any individual component or form part of a larger sub-assembly.

It should be noted that the radial distance from the axis B to each of the axes A and C is the same.

In use, the rotating assembly 10 is rotated in its entirety about the geometric axis of rotation A and, again, it is desirable that the centre of mass of the assembly 10 be co-incident with the geometric axis of rotation A.

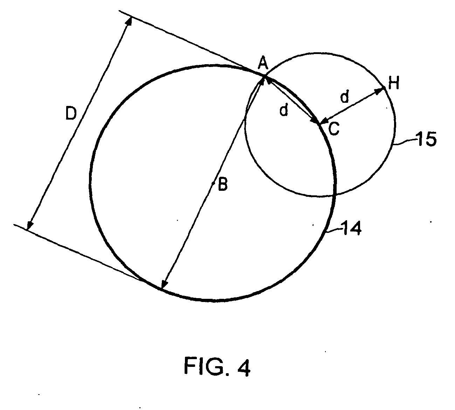

Figure 4 illustrates how independent angular adjustment of the first and second parts 11,12 and the third part 13 can be used to adjust the centre-of-mass of the rotating assembly 10 so that it coincides with the geometric axis of rotation A in Figure 3a.

When the second part 12 is rotated, relative to the first part 11, about the axis B, the third axis C will trace the circular path 14 shown in Figure 4.

In this manner, the distance between the third axis C and the geometric axis A can be varied between zero and an upper limit D, corresponding to the diameter of the circular path 14. At the same time, the radial distance of the centre-of-mass of the assembly 10 from the axis C will remain fixed and therefore, by adjusting the angular position of the first part 11 and second part 12 about the axis B, the geometric axis A can effectively be positioned at the same radial distance from the axis C as the centre-of-mass of the assembly 10.

Once the centre-of-mass and geometric axis A have been positioned at the same radial distance from the axis C, the third part 13 can then be independently rotated relative to the combination of the first part 11, second part 12 and associated bearing (not shown) to adjust the angular position of the centre-of-mass of the assembly 10 and the geometric axis A, about the axis C, until the centre-of-mass and geometric axis A are co-incident. The lines 14 and 15 in Figure 4 illustrate adjustment of a hypothetical centre-of-mass H at a (fixed) radial distance d from the third axis C so that it is co- incident with the geometric axis A.

An indication of the initial position of the centre-of-mass of the rotating assembly 3 or 10 can be determined using conventional balancing technology, for example a conventional static balancer or dynamic balancer and, once the centre of mass of the rotating assembly 3, 10 has been adjusted to be co-incident with the geometric axis of rotation A in the manner described above, the first, second and third part of the rotating assembly 3, 10 can then be fixed relative to one another in conventional manner, for subsequent operational rotation of the entire rotating assembly 3, 10 about the geometric axis A as required. Where the fixing means for the first, second and third parts add significant weight to the rotating assembly (ie sufficient weight to alter the position of the centre of mass of the rotating assembly 3) the fixing means should initially be incorporated in the rotating assembly 3, 10 during the balancing operation.

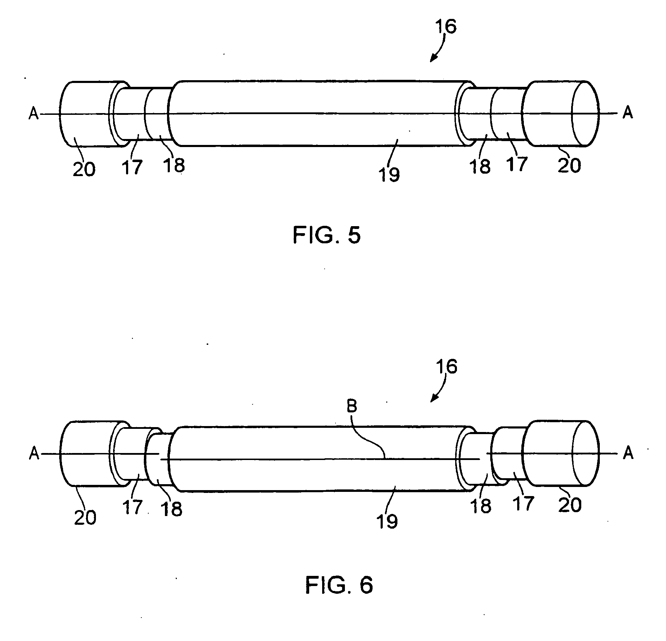

Figures 5 illustrates a rotating arrangement comprising a rotating assembly 16 similar to the rotating arrangement 10, but which comprises a pair of first parts 17 corresponding to the first part 11, a pair of second parts 18 corresponding to the second part 12, and a third part 19 corresponding to the third part 13.

The first parts 17 are mounted on a respective pair of bearings 20 (shown only very schematically in Figure 5) for rotation about a geometric axis A (corresponding to the axis A in relation to rotating assembly 10). Similarly, the second parts 18 are each mounted on the respective first parts 17 for rotation about an eccentric axis B (corresponding to the axis B in relation to rotating assembly 10), whilst the third part 19 is mounted to each of the second parts 18 for rotation relative to the second parts 18 about a third axis C (corresponding to the axis C in relation to rotating assembly 10).

The rotating assembly 16 is shown in Figure 5 in a "zero unbalance compensation" configuration, but can be used in essentially the same way as the rotating assembly 10 to adjust the centre of mass of the rotating assembly 16 to be co-incident with the geometric axis of rotation A.

Thus, by way of example, Figure 6 shows the rotating assembly 16 in a configuration compensating for a static unbalance in the assembly 16, whereby the centre-of-mass of the assembly has been adjusted to be co-incident with the geometric axis A.

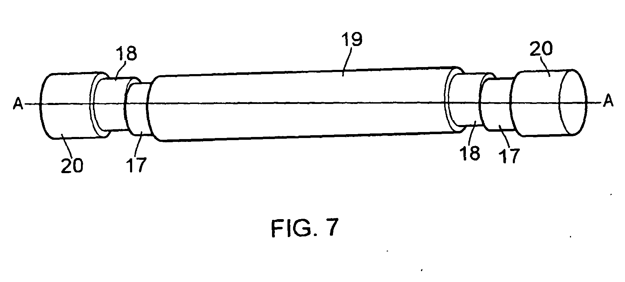

Where the dynamic unbalance in the rotating assembly 16 only comprises a static component of unbalance, adjusting the centre-of-mass of the assembly 16 to be co-incident with the geometric axis of rotation A in this manner will also dynamically balance the assembly 16 for rotation about the axis A. However, where the dynamic unbalance incorporates a significant component of couple unbalance, it is envisaged that this component of couple unbalance can additionally be compensated for by opposing angular adjustment of the second parts 18 relative to the respective first parts 17, as shown in Figure 7, so as to adjust the principal inertia axis of the rotating assembly 16 to be aligned with, or at least parallel to, the geometric axis of rotation A.

## Claims

1. A rotating arrangement comprising a rotating assembly (3,10,16) mounted on an associated bearing (2) defining a geometric axis of rotation for the rotating assembly, **characterised in that** the rotating assembly comprises:
i) a first part (4,11,17) mounted on the bearing (2,20) for rotation relative to the bearing (2,20) about the geometric axis (A);
ii) a second part (5,12,18) engaged with the first part (4,11,17) for independent relative angular adjustment about a second axis (B), eccentric to the geometric axis (A), and
iii) a third part (6,13,19) engaged with the second part (5,12,18) for independent relative angular adjustment about a third axis (C), eccentric to the second axis (B);
whereby said rotating arrangement is configured such that relative angular adjustment of the second part (5,12,18) about the second axis (B) and/or relative angular adjustment of the third part (6,13,19) about the third axis (C) will adjust the position of the centre of mass (F) of the rotating assembly such that it is substantially co-incident with the geometric axis of rotation (A).

2. A rotating arrangement according to claim 1, wherein the bearing is a circular ring bearing (2) defining the geometric axis (A) and the first part is an outer eccentric support member (4) rotatably mounted concentrically within the ring bearing (2), the second part (5) being rotatably supported inside the outer eccentric support member (4) for said angular adjustment relative to the outer eccentric support member (4), about the second axis (B).

3. A rotating arrangement according to claim 2, wherein the second part (5) is an inner eccentric support member (5) nested within the outer eccentric support member (4), the third part (6) being rotatably supported inside the inner eccentric member (5) for said independent, angular adjustment relative to the inner eccentric support member (5), about the third axis (C).

4. A rotating arrangement according to claim 1, wherein the first (11,17), second (12,18) and third (13,19) parts are displaced along the geometric axis (A).

5. A rotating arrangement according to claim 4, wherein the distance between the second axis (B) and the geometric axis (A) is substantially equal to the distance between the third axis (C) and the second axis (B).

6. A rotating arrangement according to any preceding claim, wherein the rotating assembly (16) is mounted on a spaced-apart pair of said bearings (20) and the rotating assembly (16) comprises a corresponding pair of said first parts (17) and corresponding pair of said second parts (18), the respective axial ends of said third part (19) being engaged with the second parts (18), whereby the rotating arrangement is configured such that opposing angular adjustment of the second parts (18) relative to the first parts (17) will adjust the principal inertia axis to be aligned with, or parallel to, the geometric axis of rotation (A).

7. A rotating arrangement according to any preceding claim, wherein the third part (6,13,19) is a sub-assembly comprising at least two assembled components.

8. A method of balancing the rotating assembly (3,10,16) in an arrangement according to any preceding claim, the method comprising the steps of:
i) determining an unbalance in the rotating assembly (3,10,16); and
ii) independently adjusting the angular position of each second part (5,12,18) relative to one or both of the third part (6,13,19) and the corresponding first part (4,11,17) to consequently adjust the position of the centre of mass (F) of the rotating assembly (3,10,16) to be substantially co-incident with the geometric axis of rotation (A).

## Patentansprüche

1. Umlaufende Anordnung mit einer umlaufenden Baugruppe (3,10,16), die in einem zugeordneten Lager (2) montiert ist, das eine geometrische Drehachse für die umlaufende Baugruppe definiert, **dadurch gekennzeichnet, dass** die umlaufende Baugruppe aufweist:
i) ein erstes Teil (4,11,17), das in dem Lager (2,20) relativ zu dem Lager (2,20) um die geometrische Achse (A) drehbar montiert ist,
ii) ein zweites Teil (5,12,18), das mit dem ersten Teil (4,11,17) für unabhängige relative winkelmäßige Einstellung um eine zweite Achse (B) gekuppelt ist, die exzentrisch zu der geometrischen Achse (A) ist, und
iii) ein drittes Teil (6,13,19), das mit dem zweiten Teil (5,12,18) für unabhängige relative winkelmäßige Einstellung um eine dritte Achse (C) gekuppelt ist, die exzentrisch zu der zweiten Achse (B) ist,
wobei die umlaufende Anordnung so konfiguriert ist, dass eine relative winkelmäßige Einstellung des zweiten Teils (5,12,18) um die zweite Achse (B) und/oder eine relative winkelmäßige Einstellung des dritten Teils (6,13,19) um die dritte Achse (C) die Position des Massezentrums (F) der umlaufenden Baugruppe so einstellt, dass sie im wesentlichen koinzident mit der geometrischen Drehachse (A) ist.

2. Umlaufende Anordnung nach Anspruch 1, wobei das Lager ein kreisförmiges Ringlager (2) ist, das die geometrische Achse (A) definiert, und das erste Teil ein äußeres exzentrisches Stützteil (4) ist, das konzentrisch innerhalb des Ringlagers (2) drehbar montiert ist, wobei das zweite Teil (5) innerhalb des äußeren exzentrischen Stützteils (4) für die genannte winkelmäßige Einstellung relativ zum äußeren exzentrischen Stützteil (4) um die zweite Achse (B) drehbar abgestützt ist.

3. Umlaufende Anordnung nach Anspruch 2, wobei das zweite Teil (5) ein inneres exzentrisches Stützteil (5) ist, das innerhalb des äußeren exzentrischen Stützteils (4) angeordnet ist, wobei das dritte Teil (6) innerhalb des inneren exzentrischen Teils (5) für die genannte unabhängige winkelmäßige Einstellung relativ zum inneren exzentrischen Stützteil (5) um die dritte Achse (C) drehbar abgestützt ist.

4. Umlaufende Anordnung nach Anspruch 1, wobei das erste (11,17), das zweite (12,18) und das dritte (13,19) Teil entlang der geometrischen Achse (A) versetzt sind.

5. Umlaufende Anordnung nach Anspruch 4, wobei die Distanz zwischen der zweiten Achse (B) und der geometrischen Achse (A) im wesentlichen gleich der Distanz zwischen der dritten Achse (C) und der zweiten Achse (B) ist.

6. Umlaufende Anordnung nach einem vorhergehenden Anspruch, wobei die umlaufende Baugruppe (16) in einem beabstandeten Paar der genannten Lager (20) montiert ist, und die umlaufende Baugruppe (16) ein entsprechendes Paar der genannten ersten Teile (17) und ein entsprechendes Paar der genannten zweiten Teile (18) aufweist, wobei die jeweiligen axialen Enden des dritten Teils (19) mit den zweiten Teilen (18) gekuppelt ist, wodurch die umlaufende Baugruppe so konfiguriert ist, dass eine entgegengesetzte winkelmäßige Einstellung der zweiten Teile (18) relativ zu den ersten Teilen (17) die Haupträgerachse fluchtend mit oder parallel zu der geometrischen Drehachse (A) einstellt.

7. Umlaufende Anordnung nach einem vorhergehenden Anspruch, wobei das dritte Teil (6,13,19) eine Unterbaugruppe ist, die mindestens zwei zusammengesetzte Komponenten aufweist.

8. Verfahren zum Auswuchten der umlaufenden Baugruppe (3,10,16) in einer Anordnung nach einem vorhergehenden Anspruch, wobei das Verfahren die Schritte aufweist:
i) Bestimmen einer Unwucht in der umlaufenden Baugruppe (3,10,16), und
ii) unabhängiges Einstellen der Winkelposition jedes zweiten Teils (5,12,18) relativ zu einem oder beiden von dem dritten Teil (6,13,19) und dem entsprechenden ersten Teil (4,11,17), um infolgedessen die Position des Massenzentrums (F) der umlaufenden Baugruppe (3,10,16) im wesentlichen koinzident mit der geometrischen Drehachse (A) einzustellen.

## Revendications

1. Agencement rotatif comprenant un ensemble rotatif (3, 10, 16) monté sur un palier (2) associé définissant un axe géométrique de rotation pour l'ensemble rotatif, **caractérisé en ce que** l'ensemble rotatif comprend :
i) une première partie (4, 11, 17) montée sur le palier (2, 20) pour tourner par rapport au palier (2, 20) autour de l'axe géométrique (A) ;
ii) une deuxième partie (5, 12, 18) en prise avec la première partie (4, 11, 17) pour un ajustement angulaire relatif indépendant autour d'un deuxième axe (B), excentré par rapport à l'axe géométrique (A) ; et
iii) une troisième partie (6, 13, 19) en prise avec la deuxième partie (5, 12, 18) pour un ajustement angulaire relatif indépendant autour d'un troisième axe (C), excentré par rapport au deuxième axe (B),
ledit agencement rotatif étant configuré de sorte qu'un ajustement angulaire relatif de la deuxième partie (5, 12, 18) autour du deuxième axe (B) et/ou un ajustement angulaire relatif de la troisième partie (6, 13, 19) autour du troisième axe (C) ajusteront la position du centre de masse (F) de l'ensemble rotatif de sorte qu'il coïncide sensiblement avec l'axe géométrique de rotation (A).

2. Agencement rotatif selon la revendication 1, dans lequel le palier est un palier à bague circulaire (2) définissant l'axe géométrique (A) et la première partie est un élément de support externe (4) excentré monté en rotation concentriquement dans le palier à bague (2), la deuxième partie (5) étant supportée en rotation à l'intérieur de l'élément de support externe (4) excentré pour ledit ajustement angulaire par rapport à l'élément de support externe (4) excentré, autour du deuxième axe (B).

3. Agencement rotatif selon la revendication 2, dans lequel la deuxième partie (5) est un élément de support interne (5) excentré logé dans l'élément de support externe (4) excentré, la troisième partie (6) étant supportée en rotation à l'intérieur de l'élément interne (5) excentré pour ledit ajustement angulaire indépendant par rapport à l'élément de support interne (5) excentré, autour du troisième axe (C).

4. Agencement rotatif selon la revendication 1, dans lequel les première (11, 17), deuxième (12, 18) et troisième (13, 19) parties sont déplacées le long de l'axe géométrique (A).

5. Agencement rotatif selon la revendication 4, dans lequel la distance entre le deuxième axe (B) et l'axe géométrique (A) est sensiblement égale à la distance entre le troisième axe (C) et le deuxième axe (B).

6. Agencement rotatif selon l'une quelconque des revendications précédentes, dans lequel l'ensemble rotatif (16) est monté sur une paire espacée desdits paliers (20) et l'ensemble rotatif (16) comprend une paire correspondante desdites premières parties (17) et une paire correspondante desdites deuxièmes parties (18), les extrémités axiales respectives de ladite troisième partie (19) étant en prise avec les deuxièmes parties (18), l'agencement rotatif étant configuré de sorte qu'un ajustement angulaire opposé des deuxièmes parties (18) par rapport aux premières parties (17) ajustera l'axe d'inertie principal pour qu'il soit aligné avec l'axe géométrique de rotation (A) ou parallèle à celui-ci.

7. Agencement rotatif selon l'une quelconque des revendications précédentes, dans lequel la troisième partie (6, 13, 19) est un sous-ensemble comprenant au moins deux composants assemblés.

8. Procédé d'équilibrage de l'ensemble rotatif (3, 10, 16) dans un agencement selon l'une quelconque des revendications précédentes, le procédé comprenant les étapes consistant à :
i) déterminer un déséquilibre dans l'ensemble rotatif (3, 10, 16) ; et
ii) ajuster de manière indépendante la position angulaire de chaque deuxième partie (5, 12, 18) par rapport à l'une de la troisième partie (6, 13, 19) et de la première partie (4, 11, 17) correspondante, ou aux deux, pour ajuster en conséquence la position du centre de masse (F) de l'ensemble rotatif (3, 10, 16) de manière à ce qu'il coïncide sensiblement avec l'axe géométrique rotation (A).
